# EUROPÄISCHE PATENTANMELDUNG

(11) **EP 2 871 593 A1**
(43) Veröffentlichungstag der Anmeldung: **13.05.2015**
(21) Anmeldenummer: 13192524.0
(22) Anmeldetag: 12.11.2013
(51) Int. Cl.: G06K 9/00

(54) **Fingerabdruckscanner und System aus einem Fingerabdruckscanner und einem Bedienstift**

(71) Anmelder: Identification Systems DERMALOG GmbH, 20148 Hamburg (DE)
(72) Erfinder: Mull, Günther, 22085 Hamburg (DE); Birkholz, Hermann, 20535 Hamburg (DE); Lüers, Felix, 21107 Hamburg (DE)
(74) Vertreter: UEXKÜLL & STOLBERG

(57) **Zusammenfassung**

Die Erfindung betrifft ein System aus einem Fingerabdruckscanner und einem Bedienstiftes, wobei der Fingerabdruckscanner einen durchsichtigen Auflagekörper (4) mit ebener Auflagefläche, eine Lichtquelle (1) zur Beleuchtung, einen so angeordneten Kamerasensor (5), um bei einem auf die Auflagefläche aufgelegten Finger ein aufgrund der unterschiedlichen Brechungsindexdifferenzen zwischen Auflagekörper und Luft einerseits durch Totalreflexion und zwischen Auflagekörper und aufliegenden Hautleisten andererseits durch gestörte Totalreflexion erzeugtes Bild aufnehmen zu können, und eine Datenverarbeitungseinrichtung zur Bildspeicherung aufweist, dadurch gekennzeichnet, dass die Spitze des Bedienstiftes (6) so beschaffen ist, dass sie bei Auflage auf der Auflagefläche eine die Totalreflexion aufhebende Ankopplung an den Auflagekörper (4) schafft, und dass die Datenverarbeitungseinrichtung dazu eingerichtet ist, eine Bildfolge aufzunehmen und jeweils die durch den Kamerasensor aufgenommene Position der Spitze des Bedienstiftes auf der Auflagefläche zu erfassen und in der Bildfolge als Funktion der Zeit als Kurve zu erfassen und zu speichern, um eine auf der Auflagefläche geleistete Unterschrift aufzunehmen. Die Erfindung betrifft ferner einen Fingerabdruckscanner, dessen Auflagefläche mit einer elastischen, transparenten Beschichtung versehen ist, deren Brechungsindex an den des Auflagekörpers angepasst ist und die bei Auflage der Spitze eines Bedienstiftes für eine optische Ankopplung der Spitze an die Beschichtung und den Auflagekörper sorgt, die die Totalreflexion aufhebt.

## Beschreibung

Die Erfindung betrifft einen Fingerabdruckscanner mit einem durchsichtigen Auflagekörper mit ebener Auflagefläche, einer Lichtquelle zur Beleuchtung, einem so angeordneten Kamerasensor, um bei einem auf die Auflagefläche aufgelegten Finger ein aufgrund der unterschiedlichen Brechungsindexdifferenzen zwischen Auflagekörper und Luft einerseits durch Totalreflexion und zwischen Auflagekörper und aufliegenden Hautleisen andererseits durch gestörte Totalreflexion erzeugtes Bild aufnehmen zu können, und einer Datenverarbeitungseinrichtung zur Speicherung von von dem Kamerasensor aufgenommenen Bildern. Die Erfindung betrifft ferner ein System aus eine solchen Fingerabdruckscanner und einem Bedienstift.

Ein derartiger Fingerabdruckscanner ist zum Beispiel aus EP 2 120 182 A1 bekannt. Ein Fingerabdruckscanner weist typischerweise einen durchsichtigen, prismenförmigen Auflagekörper auf, auf dessen obere Auflagefläche ein Finger zur Aufnahme eines Fingerabdruckbildes aufzulegen ist. Der Auflagekörper kann auch mehrere Prismen umfassen, wie etwa Fresnel-Prismen. Es ist ferner eine Lichtquelle vorhanden, um einen hohen Kontrast zwischen Leisten und Hintergrund zu erzeugen. Aufgrund der unterschiedlichen Brechungsindexdifferenzen zwischen Auflagekörper und Luft einerseits und zwischen Auflagekörper und aufliegenden Hautleisten andererseits wird ein Fingerabdruckbild erzeugt, das von dem Kamerasensor aufgenommen und von einer Datenverarbeitungseinrichtung zur Speicherung aufgenommen wird. Aus dem Blickwinkel des Kamerasensors erfolgt an Grenzflächen mit einem Übergang von Auflagekörper in Luft Totalreflexion, während an Grenzflächen mit auf dem Anlagekörper aufliegenden Hautleisten die Bedingungen für Totalreflexion durch die an den Auflagekörper angekoppelten Hautleisten aufgehoben oder gestört sind, so dass keine Totalreflexion mehr erfolgt (FTIR - Frustrated Total Internal Reflection).

Typische Anordnungen, die vom Prinzip der gestörten Totalreflexion Gebrauch machen, sind einerseits solche, die auf dem Prinzip der Hellfeldmessung basieren, and andererseits solche, die auf dem Prinzip der Dunkelfeldmessung beruhen.

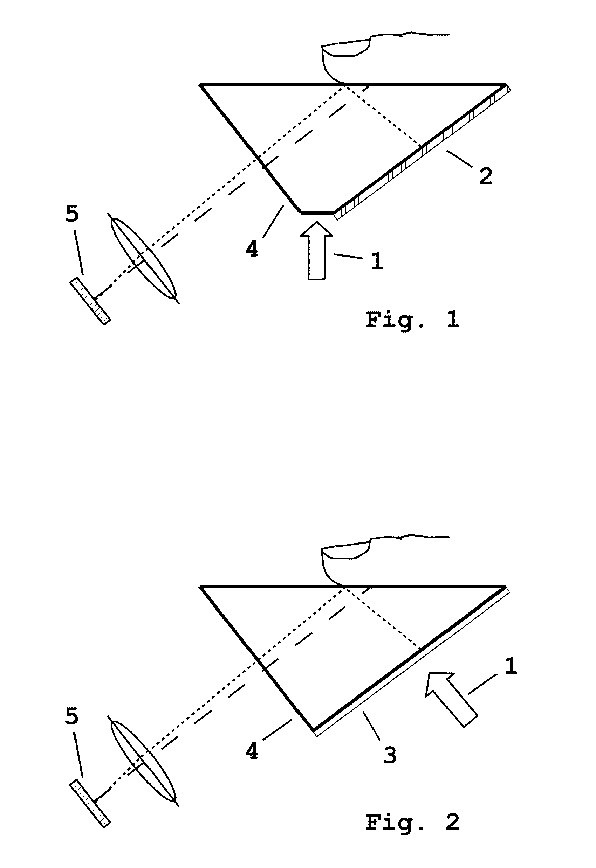

In einer beispielhaften Anordnung, die zur Dunkelfeldmessung geeignet ist, ist die Lichtquelle unterhalb des Auflagekörpers angeordnet, um den auf die Auflagefläche aufgelegten Finger von unten durch den Auflagekörper hindurch zu beleuchten. In Fig. 1 ist schematisch ein solcher Aufbau der zur Erläuterung des Prinzips notwendigen Komponenten eines Fingerabdruckscanners mit Dunkelfeldaufnahme gezeigt. Auf der oberen Auflagefläche eines transparenten Auflagekörpers 4 ist ein Finger zur Aufnahme eines Fingerabdruckbildes aufgelegt. Die Auflagefläche wird durch eine Lichtquelle 1 von unten durch den Auflagekörper 4 hindurch beleuchtet. Auf der Auflagefläche des Auflagekörpers 4 liegen die Hautleisten mit direktem Kontakt zur Auflagefläche auf, während in den zwischen den Hautleisten liegenden Zwischenräumen eine Grenzfläche von Auflagekörpern 4 zu Luft vorliegt. In Bereichen von Hautleisten ist durch deren optische Ankopplung an den Auflagekörper die Totalreflexion im Abbildungsstrahlengang gestört, und das von den Hautleisten reflektierte Licht gelangt auf den Sensor. Eine solche Reflexion ist schematisch durch die mit den längeren Strichen gestrichelte Linie in Fig. 1 angedeutet. Die Hautleisten erscheinen im vom Kamerasensor 5 aufgenommenen Bild also durch das diffus reflektierte Licht der Hautleisten hell. In den Zwischenräumen zwischen den Hautleisten tritt keine Störung der Totalreflexion auf. In den Bereichen zwischen den Hautleisten, wo die Bedingungen für Totalreflexion somit erfüllt sind, wird durch einen Strahlengang, wie er durch die mit den kürzeren Strichen dargestellte Linie exemplarisch dargestellt ist, durch Totalreflexion an der Auflagefläche des Auflagekörpers 4 ein Bild der gegenüberliegenden Seite 2 des Auflagekörpers abgebildet. Diese Seite 2 ist durch eine Beschichtung oder anderweitig abgedunkelt. In den Bereichen zwischen den Hautleisten, in denen Totalreflexion auftritt, "sieht" der Kamerasensor 5 daher das Bild der abgedunkelten Seite 2 des Auflagekörpers, wodurch das Bild des Kamerasensors 5 einen dunklen Hintergrund mit hellen Hautleisten zeigt.

In Fig. 2 ist eine entsprechende schematische Darstellung der Komponenten eines Fingerabdruckscanners gezeigt, der zur Hellfeldmessung geeignet ist. Ein gleichmäßig diffus streuendes Element 3, z.B. eine opake Beschichtung, wird durch die Lichtquelle 1 beleuchtet, wodurch eine homogene Flächenbeleuchtung entsteht. Der Finger liegt auf der Auflagefläche des Auflagekörpers 4 auf. Im Bereich von Hautleisten, wo durch die direkte Auflage der Hautleisten auf der Auflagefläche des Auflagekörpers eine andere Brechungsindexdifferenz gegeben ist, ist die Totalreflexion gestört. Ein solcher Punkt mit lokal gestörter Totalreflexion ist durch den mit den längeren Strichen gestrichelten Strahlengang beispielhaft eingezeichnet. Aus solchen Bereichen wird also durch die gestörte Totalreflexion weniger Licht auf den Kamerasensor 5 geworfen. In den Zwischenräumen zwischen den Hautleisten, in denen ungestört Totalreflexion stattfindet, wird über die Totalreflexion an der Auflagefläche die flächig beleuchtete Seite 3 des Auflagekörpers 4 mit der opaken Beschichtung abgebildet, wozu hier beispielsweise ein mit einer mit kürzeren Strichen gestrichelten Linie dargestellter Strahlengang gezeigt ist. Im Ergebnis erhält man also ein Bild mit dunklen Bereichen, die den aufliegenden Hautleisten entsprechen, und mit einem hellen Hintergrund, der den Bereichen zwischen den Hautleisten entspricht.

Fingerabdruckscanner werden heute in großem Umfang auch in Behörden oder staatlichen Stellen, die Ausweisunterlagen herstellen, eingesetzt, da in vielen Ländern Ausweise und Reisepässe mit einem gespeicherten Fingerabdruckbild des Inhabers versehen werden. Im Zusammenhang mit der Erstellung von Ausweisen wird auch oft eine Unterschrift des Ausweisinhabers aufgenommen. Daher sind in vielen Behörden an den betroffenen Arbeitsplätzen jeweils sowohl ein Fingerabdruckscanner als auch ein Unterschrift-Aufnahmegerät vorhanden. Unterschrift-Aufnahmegeräte haben in der Regel eine berührungs- oder druckempfindliche Anzeigefläche, auf der der Benutzer mit einem Stift unterschreibt, wobei die berührungsempfindliche Signaturfläche die Unterschrift als Kurve erfasst und diese elektronisch in einer angeschlossenen Datenverarbeitungseinrichtung gespeichert wird.

Es ist Aufgabe der vorliegenden Erfindung, einen Fingerabdruckscanner und ein System aus Bedienstift und Fingerabdruckscanner so zu gestalten, dass die Aufnahme eines Fingerabdruckbildes und die Aufnahme der Unterschrift der Person apparativ mit weniger Aufwand möglich ist.

Zur Lösung dieser Aufgabe dient das System aus Fingerabdruckscanner und Bedienstift mit den Merkmalen des Patentanspruchs 1 und der Fingerabdruckscanner mit den Merkmalen des Patentanspruchs 6. Vorteilhafte Ausführungsformen der Erfindung sind in den Unteransprüchen angegeben.

Erfindungsgemäß ist bei einem System aus Fingerabdruckscanner und Bedienstift vorgesehen, dass die Spitze des Bedienstiftes so beschaffen ist, dass sie bei Auflage auf der Auflagefläche eine die Totalreflexion aufhebende Ankopplung an den Auflagekörper schafft. Dazu muss die Spitze des Bedienstiftes eine gewisse Elastizität aufweisen, so dass bei Andruck der Spitze des Bedienstiftes mit einer beim Schreiben üblichen Andruckkraft ein flächiger Kontakt zwischen der Spitze des Bedienstiftes und der Auflagefläche des Auflagekörpers zustande kommt, im Gegensatz zu einem reinen punktförmigen Kontakt zwischen einer sehr harten Spitze auf einem harten Auflagekörper. Eine solche Elastizität zur flächigen Ankopplung der Spitze des Bedienstiftes weisen die in Frage kommenden Materialien wie Kunststoffe und Kautschukprodukte in aller Regel auf.

Die Datenverarbeitungseinrichtung ist nun dazu eingerichtet eine Folge von Bildern aufzunehmen und darin jeweils die Position der Spitze des Kamerasensors zu erfassen und so die Position der Spitze des Bedienstiftes auf der Auflagefläche als Funktion der Zeit als Kurve aufzunehmen und zu speichern, um eine auf der Auflagefläche geleistete Unterschrift aufzunehmen.

In einer bevorzugten Ausführungsform des Systems ist der Fingerabdruckscanner zur Dunkelfeldaufnahme ausgestaltet. Die Spitze des Bedienstiftes ist diffus reflektierend. Bei der Dunkelfeldaufnahme wird die Auflagefläche von unten durch den Auflagekörper hindurch von der Lichtquelle beleuchtet. Dort wo keine optische Ankopplung vorhanden ist, tritt keine diffuse Reflexion zum Kamerasensor hin auf, so dass das gesamte Hintergrundbild in dessen Aufnahme dunkel ist. In dem Bereich, wo die Spitze des Bedienstiftes durch Auflage optisch angekoppelt ist, tritt an der Grenzfläche diffuse Reflexion auf, so dass ein Teil der reflektierten Strahlen als heller Fleck im Bild des Kamerasensors erscheint. Die diffuse Reflexion durch die Spitze des Bedienstiftes sollte so stark sein, dass die Spitze als heller Fleck als Kontrast zum dunklen Hintergrund im Bild des Kamerasensors erfassbar ist. Dies ist für die praktisch in Frage kommenden Materialien aus Kunststoff, Silikon oder Kautschuk immer der Fall, wenn sie nicht vollständig schwarz eingefärbt sind.

Nach einer alternativen Ausführungsform ist der Fingerabdruckscanner zur Hellfeldaufnahme ausgestaltet. Die Spitze des Bedienstiftes ist für Licht aus der Lichtquelle absorbierend, so dass die Spitze des Bedienstiftes durch eine ihrer Auflagestelle absorbiertes Licht als dunkler Fleck mit Kontrast zum hellen Hintergrund im Bild des Kamerasensors erfassbar ist.

In einer bevorzugten Ausführungsform mit einem Fingerabdruckscanner für die Dunkelfeldaufnahme kann die Spitze des Bedienstiftes mit einer Lichtquelle versehen sein, so dass Licht aus der Spitze des Bedienstiftes bei deren optischer Ankopplung an den Auflagekörper in den Auflagekörper eingekoppelt wird, um den Kontrast des durch die Spitze des Bedienstiftes erzeugten hellen Flecks in dem vom Kamerasensor aufgenommenen Bild zum dunklen Hintergrund zu erhöhen. Licht kann z.B. von einer Lichtquelle im Stift über Lichtleiter in die Spitze geleitet werden.

In einer bevorzugten Ausführungsform ist die Datenverarbeitungseinrichtung dazu eingerichtet, in der Bildfolge jeweils ein Maß für die Fläche der im Bild aufgenommenen Spitze des Bedienstiftes zu bestimmen und als Funktion der Zeit oder des Ortes zusammen mit der Kurve des Schriftzuges zu speichern. Die Fläche der optisch angekoppelten Spitze des Bedienstiftes ist ein Maß für die Kraft, mit der der Bedienstift an die Auflagefläche angedrückt wird. Der Verlauf der Andruckkraft über den Verlauf des Schriftzugs liefert charakteristische Eigenschaften der Unterschrift, die ergänzend zur Bewertung der Echtheit der Unterschrift herangezogen werden können. Als Maß für die Fläche der Spitze kann die Fläche selbst, ein Durchmesser, der Umfang der Spitze im Bild etc. verwendet werden.

Es ist ein Vorteil der vorliegenden Erfindung, dass die Aufzeichnung der Unterschrift durch Fremdlicht, wie etwa Tageslicht oder künstliche Beleuchtung an den Arbeitsplätzen, nicht beeinträchtigt wird, da sowohl in der Hellfeldaufnahme als auch in der Dunkelfeldaufnahme Störlichteinflüsse die Aufnahme nicht beeinträchtigen, da in jedem Fall ein deutlicher Kontrast zwischen dem Ort der optischen Ankopplung der Spitze des Bedienstiftes und dem umgebenden Hintergrund erreicht wird. Im Fall der Dunkelfeldmessung wird nur am Ort der Spitze des Bedienstiftes Licht in den Auflagekörper eingekoppelt, während der Rest der Auflagefläche im Bild des Kamerasensors dunkel erscheint, unabhängig davon, ob noch äußere Beleuchtungseinflüsse vorhanden sind. Bei der Hellfeldmessung wird nur an dem Ort der optisch angekoppelten Spitze des Bedienstiftes Licht ausgekoppelt, so dass auch in diesem Fall unabhängig von äußeren Beleuchtungssituationen die Spitze des Bedienstiftes als dunkler Fleck vor dem hellen Hintergrund im Bild des Kamerasensors erfassbar ist.

Nach einem weiteren Aspekt ist ein Fingerabdruckscanner vorgesehen, dessen Auflagekörper auf seiner Auflagefläche mit einer elastischen Beschichtung versehen ist, die bei Auflage der Spitze eines Bedienstiftes für eine flächige optische Ankopplung der Spitze an die Beschichtung und den Auflageflächekörper sorgt. Dazu ist wiederum Elastizität erforderlich, damit eine flächige und nicht nur punktförmige Ankopplung der Stiftspitze erfolgt, die die Totalreflexion an der Auflagestelle aufhebt. Die elastische Beschichtung, z.B. aus Silikon, ist in ihrem Brechungsindex an den des Auflagekörpers angepasst, d.h. der Brechungsindex der Beschichtung ist weit genug von dem von Luft entfernt, so das an der Grenzfläche zwischen Beschichtung und Auflagekörper unter dem Betrachtungswinkel des Kamerasensors keine Totalreflexion stattfindet. In einer Folge von aufgenommenen Bildern während der Ausführung der Unterschrift kann so die Position der Stiftspitze als Funktion der Zeit verfolgt und somit als Kurve des Schriftzuges erfasst und gespeichert werden. In diesem Fall kommt es auf die Beschaffenheit der Spitze des Bedienstiftes hinsichtlich ihrer Elastizität nicht an, so dass alle gängigen Stifte verwendet werden können.

Auf diese Weise ist es ohne oder ohne größere Modifikationen des bereits vorhandenen Fingerabdruckscanners möglich, mit diesem auch die Unterschrift der Person aufzunehmen. Dadurch entfällt die Notwendigkeit an Arbeitsplätzen, z.B. in Behörden, jeweils neben dem Fingerabdruckscanner noch ein Unterschrift-Aufnahmegerät vorzusehen, vollständig.

Die Erfindung wird im Folgenden anhand eines Ausführungsbeispiels in Verbindung mit Zeichnungen beschrieben, in denen:
Fig. 1 eine schematische Ansicht eines Fingerabdruckscanners für Dunkelfeldaufnahme zeigt,
Fig. 2 eine schematische Darstellung eines Fingerabdruckscanners zur Hellfeldaufnahme zeigt,
Fig. 3 eine schematische Darstellung eines Fingerabdruckscanners zur Dunkelfeldaufnahme bei Andruck der Spitze eines Bedienstiftes auf die Auflagefläche zeigt und
Fig. 4 eine Folge von Aufnahmen des Kamerasensors des Fingerabdruckscanners aus Fig. 3 bei Bewegung der Spitze des Bedienstiftes über die Auflagefläche zeigt.

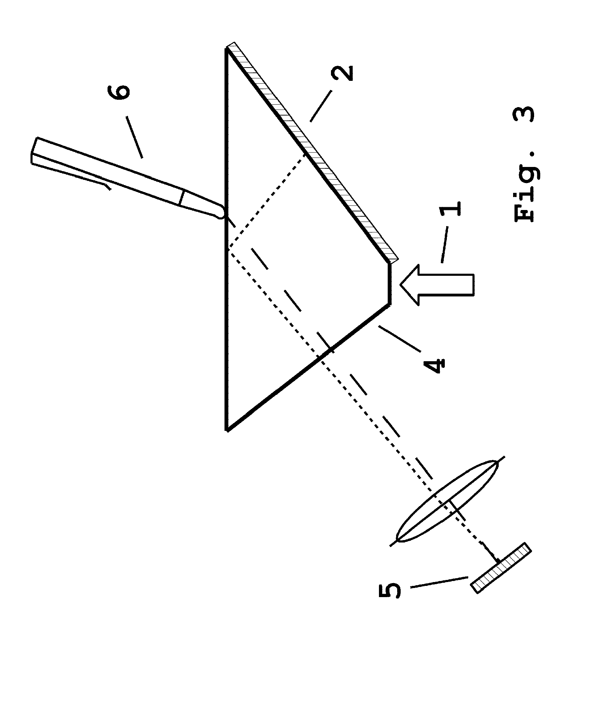

In Fig. 3 ist schematisch ein Fingerabdruckscanner zur Dunkelfeldaufnahme gezeigt. Zur Aufnahme einer Unterschrift wird die Spitze eines Bedienstiftes 6 von einer unterschreibenden Person in Anlage an die Oberfläche des Auflagekörpers 4 des Fingerabdruckscanners gebracht und bei der Durchführung der Unterschrift über die Oberfläche des Auflagekörpers 4 bewegt. In diesem Ausführungsbeispiel hat der Bedienstift, der zu dem System aus Fingerabdruckscanner und Bedienstift gehört, eine Spitze aus elastischem und diffus reflektierendem Material. Die Elastizität soll gewährleisten, dass bei Andruck der Spitze auf die Auflagefläche mit beim Schreiben üblicher Kraft beim Schreiben, ein nicht punktförmiger, sondern im gewissen Umfang flächiger Kontakt zwischen der Spitze und dem Auflagekörper hergestellt wird. Diese Kontaktfläche sollte zum Beispiel im Bereich von 1 bis 10 mm² liegen, damit der durch die Auflage der Spitze in dem aufgenommenen Bild entstehende Fleck eine ausreichende Größe hat, damit er als zusammenhängende Ansammlung von Bildelementen sicher als Spitze des Bedienstiftes erfasst werden kann. In Frage kommende Materialien für die Spitze des Bedienstiftes, wie etwa ein weiter Bereich von Kunststoffen, liefern eine geeignete Elastizität, um eine nicht nur punktförmige, sondern im gewissen Umfang flächige Ankopplung der Spitze des Bedienstiftes bei üblichem Andruck beim Schreiben zu erreichen. Weitere geeignete Materialien für eine solche Spitze sind z.B. Silikon oder Kautschuk.

Ferner soll bei diesem Ausführungsbeispiel mit Dunkelfeldaufnahme die Spitze des Bedienstiftes 6 diffus reflektierend sein, damit von ihr diffus reflektiertes Licht als Lichtfleck vor dem dunklen Hintergrund im Bild es Kamerasensors erfasst werden.

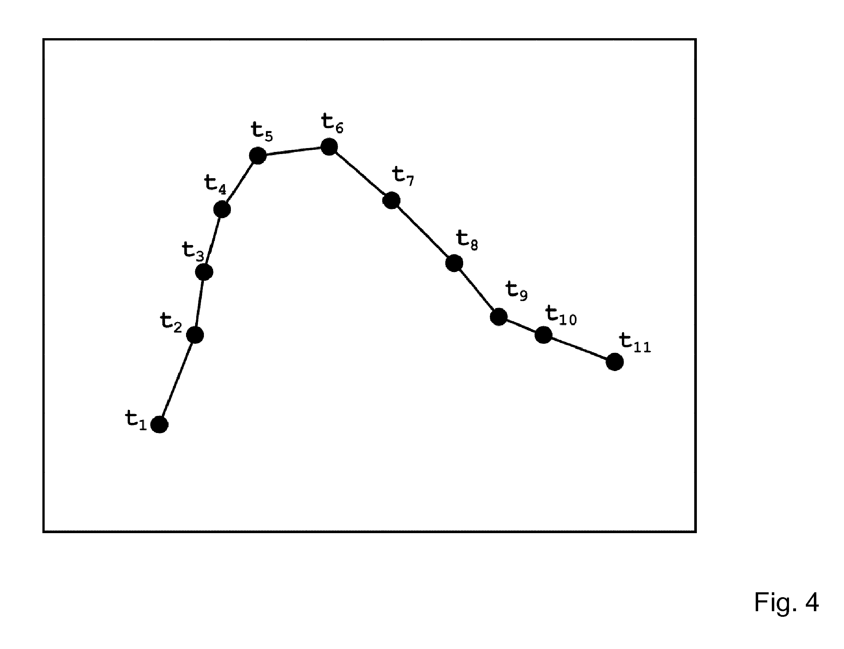

In einem Ausführungsbeispiel wurden mit dem Kamerasensor Bilder mit einer Abtastrate von 60 Bildern pro Sekunde bei der Bewegung der Spitze des Bedienstiftes über die Auflagefläche beim Ausführen der Unterschrift aufgenommen. Ein Ausschnitt aus der aufgenommenen Kurve mit den Positionen der Stiftspitze in den Bildern zu den Abtastzeitpunkten t₁ bis t₁₁ ist in Fig. 4 dargestellt. Fig. 4 zeigt die aufgenommene Auflagefläche des Auflagekörpers mit den aufgenommenen Positionen der Spitze des Bedienstiftes in 11 aufeinanderfolgenden Bildaufnahmen bei einer Abtastrate von 60 Bildern pro Sekunde. Die durch die aufgenommenen Punkte repräsentierte Kurve der Unterschrift repräsentiert also nur einen kleinen Ausschnitt aus der gesamten Unterschrift, die sich nach den hier beispielhaft dargestellten Abtastpunkten fortsetzt.

Die Unterschrift kann als Folge von aufeinanderfolgenden Positionen der Stiftspitze zu den Abtastzeitpunkten gespeichert werden. Es kann auch durch Anpassung geeigneter Funktionen (z.B. Spline-Funktionen) eine Kurvenanpassung an die Schriftzugkurve der Unterschrift vorgenommen werden, und diese durch Kurvenanpassungen gewonnene Parametrisierung der Unterschrift abgespeichert werden.

Falls ein Fingerabdruckscanner ohne zugehörigen Stift mit einem beliebigen gewöhnlichen Bedienstift zur Aufnahme einer Unterschrift geeignet sein soll, muss die Auflagefläche des Auflagekörpers mit einer dünnen elastischen Beschichtung, zum Beispiel einer Silikonbeschichtung, versehen sein, deren Brechungsindex an den des Auflagekörpers angepasst ist. Diese elastische Beschichtung dient dazu, dass auch bei Auflage einer beliebigen Stiftspitze, die sehr hart und spitz sein kann durch die Verformung der Beschichtung eine flächige Ankopplung der Spitze des Bedienstiftes erfolgt, so dass deren Position im Bild des Kamerasensors gut erfassbar ist.

Der in diesem Beispiel verwendete Fingerabdruckscanner hat eine physikalische Auflösung von 300 ppi in horizontaler und 200 ppi in vertikaler Richtung. Die zum Schreiben der Unterschrift benutzte Auflagefläche des Auflagekörpers ist 80 mm breit und 70 mm hoch.

## Patentansprüche

1. System aus einem Fingerabdruckscanner und einem Bedienstiftes, wobei der Fingerabdruckscanner einen durchsichtigen Auflagekörper (4) mit ebener Auflagefläche, eine Lichtquelle (1) zur Beleuchtung, einen so angeordneten Kamerasensor (5), um bei einem auf die Auflagefläche aufgelegten Finger ein aufgrund der unterschiedlichen Brechungsindexdifferenzen zwischen Auflagekörper und Luft einerseits durch Totalreflexion und zwischen Auflagekörper und aufliegenden Hautleisten andererseits durch gestörte Totalreflexion erzeugtes Bild aufnehmen zu können, und eine Datenverarbeitungseinrichtung zur Bildspeicherung aufweist, **dadurch gekennzeichnet, dass** die Spitze des Bedienstiftes (6) so beschaffen ist, dass sie bei Auflage auf der Auflagefläche eine die Totalreflexion aufhebende Ankopplung an den Auflagekörper (4) schafft, und dass die Datenverarbeitungseinrichtung dazu eingerichtet ist, eine Bildfolge aufzunehmen und jeweils die durch den Kamerasensor aufgenommene Position der Spitze des Bedienstiftes auf der Auflagefläche zu erfassen und in der Bildfolge als Funktion der Zeit als Kurve zu erfassen und zu speichern, um eine auf der Auflagefläche geleistete Unterschrift aufzunehmen.

2. System aus einem Fingerabdruckscanner und einem Bedienstift nach Anspruch 1, **dadurch gekennzeichnet, dass** der Fingerabdruckscanner zur Dunkelfeldaufnahme ausgestaltet ist und dass die Spitze des Bedienstiftes (6) diffus reflektierend ist, so dass die Spitze des Bedienstiftes Licht von der Lichtquelle diffus reflektiert und dadurch als heller Fleck mit Kontrast zum dunklen Hintergrund im Bild des Kamerasensors erfassbar ist.

3. System aus einem Fingerabdruckscanner und einem Bedienstift nach Anspruch 1, **dadurch gekennzeichnet, dass** der Fingerabdruckscanner zur Hellfeldaufnahme ausgestaltet ist und dass die Spitze des Bedienstiftes (6) absorbierend ist, so dass die Spitze des Bedienstiftes durch dort absorbiertes Licht als dunkler Fleck mit Kontrast zum hellen Hintergrund im Bild des Kamerasensors erfassbar ist.

4. System aus einem Fingerabdruckscanner und einem Bedienstift nach Anspruch 2, **dadurch gekennzeichnet, dass** die Spitze des Bedienstiftes mit einer Lichtquelle versehen ist, so dass Licht aus der Spitze des Bedienstiftes bei deren optischer Ankopplung an den Auflagekörper in den Auflagekörper eingekoppelt wird, um den Kontrast des durch die Spitze des Bedienstiftes erzeugten hellen Flecks in dem vom Kamerasensor aufgenommenen Bild zum dunklen Hintergrund zu erhöhen.

5. System aus einem Fingerabdruckscanner und einem Bedienstift nach einem der vorhergehenden Ansprüche, **dadurch gekennzeichnet, dass** die Datenverarbeitungseinrichtung dazu eingerichtet ist, in der Bildfolge jeweils ein Maß für die Fläche des der im Bild aufgenommenen Spitze des Bedienstiftes (6) zu bestimmen und als Funktion der Zeit oder des Ortes zusammen mit der Kurve des Schriftzuges zu speichern.

6. Fingerabdruckscanner mit einem durchsichtigen Auflagekörper (4) mit ebener Auflagefläche, einer Lichtquelle (1) zur Beleuchtung, einem so angeordneten Kamerasensor (5), um bei einem auf die Auflagefläche aufgelegten Finger ein aufgrund der unterschiedlichen Brechungsindexdifferenzen zwischen Auflagekörper und Luft einerseits durch Totalreflexion und zwischen Auflagekörper und aufliegenden Hautleisten andererseits durch gestörte Totalreflexion erzeugtes Bild aufnehmen zu können, und einer Datenverarbeitungseinrichtung zur Auswertung von von dem Kamerasensor aufgenommenen Bildern, wobei die Funktion des Fingerabdruckscanners auf dem Prinzip der Dunkelfeldmessung beruht, **dadurch gekennzeichnet, dass** der Auflagekörper auf der Auflagefläche mit einer elastischen, transparenten Beschichtung versehen ist, deren Brechungsindex an den des Auflagekörpers angepasst ist und die bei Auflage der Spitze eines Bedienstiftes für eine optische Ankopplung der Spitze an die Beschichtung und den Auflagekörper sorgt, die die Totalreflexion aufhebt, und dass die Datenverarbeitungseinrichtung dazu eingerichtet ist, eine Bildfolge aufzunehmen und jeweils die durch den Kamerasensor aufgenommene Position der Spitze des Bedienstiftes auf der Auflagefläche zu erfassen und in der Bildfolge als Funktion der Zeit als Kurve zu erfassen und zu speichern, um eine mit einem Stift auf der Auflagefläche geleistete Unterschrift aufzunehmen.

7. Fingerabdruckscanner nach Anspruch 6, **dadurch gekennzeichnet, dass** die Datenverarbeitungseinrichtung dazu eingerichtet ist, in der Bildfolge jeweils ein Maß für die Fläche der im Bild des Kamerasensors aufgenommenen Spitze des Bedienstiftes zu bestimmen und als Funktion der Zeit oder des Ortes zusammen mit der Kurve des Schriftzuges zu speichern.
